# EUROPEAN PATENT SPECIFICATION

(11) **EP 4 232 411 B1**
(45) Date of publication and mention of the grant of the patent: **12.02.2025**
(21) Application number: 21798813.8
(22) Date of filing: 25.10.2021
(51) Int. Cl.: C02F 1/22, C02F 1/44, C02F 103/06

(54) **PURIFICATION METHOD FOR LANDFILL LEACHATE**
REINIGUNGSVERFAHREN FÜR DEPONIESICKERWASSER
PROCÉDÉ D'ÉPURATION DE LIXIVIATS DE DÉCHARGE

(30) Priority: 23.10.2020 NL 2026750
(43) Date of publication of application: 30.08.2023
(73) Proprietor: Cool Separations B.V., 3176 PR Poortugaal (NL)
(72) Inventor: VAN SPRONSEN, Jaap, 3176 PR Poortugaal (NL); ALJIRJAWI, Mohammed, 3176 PR Poortugaal (NL); OTTEN, Jordy, 3176 PR Poortugaal (NL)
(74) Representative: V.O.
(86) International application number: PCT/NL2021/050646
(87) International publication number: WO 2022/086336

(56) References cited:
- EP-A1- 2 763 769
- EP-B1- 2 763 769
- WO-A1-2010/009933
- WO-A1-2014/209112
- WO-A1-2020/028995
- CN-A- 102 167 452
- CN-A- 103 319 047
- CN-A- 103 964 609
- US-A- 3 992 900
- US-A1- 2018 319 673
- RANDALL D G ET AL: "A case study for treating a reverse osmosis brine using Eutectic Freeze Crystallization-Approaching a zero waste process", DESALINATION, ELSEVIER, AMSTERDAM, NL, vol. 266, no. 1-3, 31 January 2011 (2011-01-31), pages 256 - 262, XP027536973, ISSN: 0011-9164, [retrieved on 20101130]
- HASAN M ET AL: "Salt recovery from wastewater by air-cooled eutectic freeze crystallization", CHEMICAL ENGENEERING JOURNAL, ELSEVIER, AMSTERDAM, NL, vol. 326, 23 May 2017 (2017-05-23), pages 192 - 200, XP085129047, ISSN: 1385-8947, DOI: 10.1016/J.CEJ.2017.05.136

## Description

The invention is in the field of landfill leachate, in particular the invention is directed to a method to purify the landfill leachate.

Due to the continuously increasing world population, industrialization and to the intensifying and expansion of the agricultural sector a significant increase in waste is realized. The waste is a large pollutant of the land, rivers, oceans and the atmosphere. It is therefore highly desired to convert to a more circular economy (*i.e.* a system of closed loops in which renewable sources are used and in which the used materials lose their value as little as possible) to minimize waste. For example, China has an urgent demand for a more circular economy as the rapid increase of their economic prosperity has a large impact on the environment. As a helping hand, an interest is taken to minimize pollution from landfill leachate.

Landfill leachate is a term that is used for water (*e.g.* precipitation) that has percolated through the waste, while gradually absorbing and/or dissolving contaminants such as salts, organic compounds and heavy metals. Dependent on the composition and the age of the landfill the leachate becomes more or less contaminated. As direct flow into the soil and/or groundwater is preferably prevented, many landfill sites have been engineered to have impermeable liners.

Instead of the direct flow into the soil and/or groundwater, the leachate may be collected and recirculated over the landfill. The recirculation typically enhances the (biological) breakdown and decomposition of the organic compounds to *i.a.* CO₂, water and natural gas. Additionally, recirculation may allow for the precipitation of at least a part of the heavy metal contaminants.

Further treatment of the leachate may comprise a variety of physical, chemical and/or biological processes such as pH modification and coagulation of solids. However, not all contaminants can be removed by recirculation and the further treatment as especially salts remain dissolved in the leachate. After the processing, the leachate is disposed of in the environment or alternatively, processed and diluted in a regular water treatment plant to comply with the national waste regulations before disposal.

However, the volume of the leachate may surpass the dilution capacity, or a country may not have the resources. Additionally, the disposal of the diluted leachate does not fit into a circular economy.

One method to further process the leachate is to concentrate the leachate by, for instance, reverse osmosis (herein also referred to as RO). RO uses a membrane that in principle only allows water molecules to pass. By applying pressure, the water is pushed through the membrane, thereby typically obtaining pure water on one side and a more concentrated leachate on the other side. The obtained concentration of the leachate is typically between 3-5 wt% TDS (total dissolved solids). Disposal of such a concentrated stream is not possible, and neither is further concentrating the stream by RO due to *e.g.* scaling. An alternative way to further increase the concentration is by recirculation over the landfill, and thereby letting the leachate absorb additional contaminants. However, this is now prohibited in several countries including China. Methods to dispose of the leachate include incineration, which is costly, and evaporation in evaporation ponds, which requires large surfaces of land. Therefore, an alternative and/or improved method to further purify the leachate is highly desired.

Several alternatives for treating landfill leachate have been proposed for example in CN103964609, where lime and sodium carbonate are added before filtrating and concentrating the leachate. Disadvantageously, a concentrated waste stream remains that needs to be disposed of. Another method is disclosed in CN102167452. However, the disclosed method requires several chemical processes (*i.a.* pH adjustment, wet catalytic oxidation).

Alternatively, an at least partially biological treatment for landfill leachate is disclosed in CN103319047. The biological treatment includes a multi-stage biological treatment unit which uses microorganisms. By using the disclosed method, the organic pollutants are degraded and heavy metals and phosphorus are removed. However, dependent on the concentration, up to 150 biochemical pools are required and care should be taken to provide a livable environment for the microorganisms. US 2018/319673 relates to treatment of landfill leachate and discloses eutectic freezing to obtain crystallised clathrate hydrates and a solvent.

Another alternative is solidification by evaporation in a continuous process. This process increases the temperature of the leachate to the boiling point resulting in evaporation of the water and solidification of the dissolved salts. The condensed water may be disposed of and the salts are subjected to centrifuging and are *e.g.* stored. However, this process is energy consuming, sensitive to corrosion and sensitive to scaling which typically requires the process to be placed on hold, consuming valuable time and energy. Additionally, due to the high temperature involved with the evaporation of water, an explosion risk is associated with this process as the salts may comprise ammonium and nitrates which could explosively react with each other.

Furthermore, the disclosed methods do not allow for individual isolation of the salts.

It is an object of the present inventors to provide an improved method for purifying landfill leachate that overcomes at least part of the above-mentioned drawbacks.

The present inventors found that a method comprising eutectic freeze crystallization enables purification of landfill leachate by the formation of ice and one or more pure crystalline salts. This is particularly surprising since landfill leachate comprises a complex mixture of dissolved salts and organic compounds.
Figure 1 illustrates a phase diagram for a binary aqueous salt solution.
Figure 2 illustrates a scheme of one EFC crystallizer.
Figure 3 illustrates a scheme of an embodiment of the present invention comprising more than one EFC crystallizer.

Accordingly, the invention is directed to a method for purifying landfill leachate (1) comprising water, dissociated ions and organic compounds, wherein the method comprises:
- providing the leachate (1) in a eutectic freeze crystallization (EFC) crystallizer (2);
- carrying out eutectic freeze crystallization by reducing the temperature of the leachate to a first eutectic point to obtain a first mixture (3) comprising ice and a first crystalline salt;
- separating (4) the ice and said first crystalline salt into an ice stream (5) and a crystalline salt stream (6) to provide a first slurry stream (6) comprising the first crystalline salt and a second slurry stream (5) comprising the ice;
   - recovery by separating and individually recovering the first crystalline salt (12) and a first mother liquor (11) from the first slurry stream;
   - providing a first bleed stream (13) which is at least part of the first mother liquor in a second eutectic freeze crystallization (EFC) crystallizer (20);
   - carrying out eutectic freeze crystallization by reducing the temperature of the first bleed stream to a second eutectic point to obtain a second mixture (30) comprising ice and a second crystalline salt;
   - separating the ice and said second crystalline salt into a second ice stream (50) and a second crystalline salt stream (60).

The leachate comprises water, dissociated ions and organic compounds. The dissociated ions typically originate from salts (*e.g.* CaSO₄, MgSO₄, Na₂SO₄, MgCl₂, Mg(NO₃)₂, Ca(NO₃)₂, CaCl₂, NaNO₃, NaCl, K₂SO₄, KNO₃, KCl) that have been dissolved in the water while percolating through the landfill. Accordingly, typical dissociated ions include, but are not limited to, magnesium (Mg²⁺), calcium (Ca²⁺), sodium (Na⁺), potassium (K⁺), sulfate (SO₄²-), nitrate (NO₃⁻), chloride (Cl⁻) and ammonium (NH₄⁺). Other ions may also be present at lower levels, dependent on the origin of the waste. The organic compounds that are often found in landfill leachate may comprise humic acids.

Typically, the leachate originates from the RO unit present on the landfill site (*vide supra*) or from one or more pretreatment steps (*vide infra*). Accordingly, the rate at which the leachate can be provided for the method according to the present invention may dependent on the capacity of the one or more previous steps. For instance, the leachate can be provided at a rate between 5-15 m³/hour, preferably between 8-12 m³/hour, such as 10 m³/hour. In order to fully utilize all the leachate that is provided, a number of parallel EFC crystallizers may be used over which the input of leachate is divided. For example, an EFC crystallizer with a volume of approximately 1.5m³ can receive around 440 kg/hour of leachate. To treat all the leachate, it may be required to have several EFC crystallizers in parallel, such as 10 or 12. Alternatively, or additionally, larger EFC crystallizers may be used. This may be particularly beneficial when the leachate originates from the one or more previous steps at a rate between 15-120 m³/hour, preferably between 20-100m³/hour.

After the provision of the leachate, a eutectic freeze crystallization (EFC) is carried out. EFC is a process that is known to recover ice and crystallizable compounds as disclosed in for instance EP2763769. The EFC process in general is described in *e.g.* Chapter 1 of Lu (2014), Novel Applications of Eutectic Freeze Crystallization, Delft University of Technology. The process can be seen as a combination of crystallization by concentration and crystallization by freezing and it is related to the thermodynamics of a system.

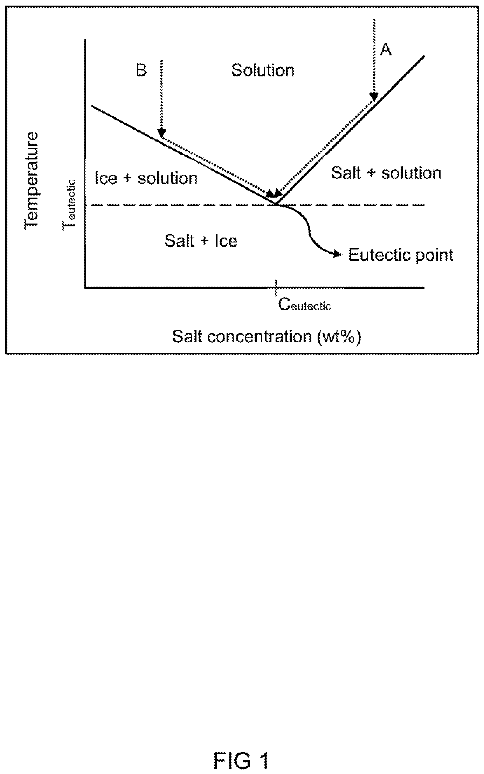

The method according to the present invention is carried out by lowering the temperature to a eutectic point. The eutectic point is a combination of a temperature and a concentration of the solution at which two components of the solution crystallize. The temperature and concentration at which the eutectic point can be found is dependent on the thermodynamic system of the leachate (*i.a.* the number of individual solutes) and may be determined from a phase diagram or may be experimentally found. A typical phase diagram (x-axis; concentration, y-axis: temperature at constant pressure) for binary aqueous solutions, such as an aqueous solution of a salt is illustrated in Figure 1 and indicates the salt solubility line and the ice line. These lines divide the phase diagram into several regions. A region of one phase (*i.e.* solution), two phases (*i.e.* salt in equilibrium with the solution; ice in equilibrium with the solution; ice and salt) and three phases (ice, salt and solution in equilibrium). The point at which the three phases are in equilibrium reflects the eutectic point (*i.e.* the cross-section of the salt solubility line and the ice line), with a corresponding eutectic temperature and eutectic concentration. For a solution comprising several solutes, the phase diagram is more complex and several eutectic points can be determined.

In general, dependent on the concentration of the dissolved salt, either ice or the crystalline salt starts to form first. If the concentration of the dissolved salt is above the eutectic concentration and the temperature is lowered, the temperature will reach the salt solubility line at which point the salt begins to crystallize. The crystallization results in a lowering of the concentration of the dissolved salt in the leachate and thus by lowering the temperature the salt solubility line is followed up to the eutectic point. Here ice starts to form, and the ice and crystalline salt crystallize simultaneously, *i.e.* the eutectic point has been reached. This process is seen in Figure 1 following path A.

Alternatively, path B of Figure 1 may be followed if the concentration of the dissolved salt is below the eutectic concentration and the temperature is lowered, the temperature will reach the ice line at which ice starts to form. Due to the freezing out of the water, the concentration of the dissolved salt starts to increase and the ice line is followed to the eutectic point. At this point the salt starts to crystallize simultaneously with the ice, *i.e.* the eutectic point has been reached.

EFC is herein used for leachate, which is a more complex solution (*e.g.* with more solutes). The ice and a first salt crystallize at a first eutectic point, leaving the leachate with a higher concentration of the remaining solutes (*i.e.* dissociated ions and organic compounds). In subsequent steps the other solutes may crystallize one by one (*vide infra*). Which crystalline salt forms first is dependent on several factors, such as type and number of the dissociated ions and the concentration thereof. The organic compounds (*e.g.* type and concentration) may possibly also be of minor influence on the sequence of crystallization.

Accordingly, in the present invention, the ice forms simultaneously with the first crystalline salt in the eutectic freeze crystallization. As the provided leachate typically has a concentration of the dissociated ions corresponding to the first crystalline salt that is below the eutectic concentration, the ice typically forms before the formation of the first crystalline salt.

The method according to the present invention is associated with several benefits. A first benefit is that the crystallization of water of about 20 °C into ice generally consumes 7 times less energy than evaporation of this water. Even if the evaporation process is fully optimized, a factor of at least 2 typically remains. Accordingly, the CO₂ emission from the EFC process may be significantly lower than from the evaporation process. Further, surprisingly, no scaling or at least substantially no scaling is observed when using EFC in accordance with the present invention for leachate. Moreover, the EFC allows collection of at least substantially pure crystalline salts. These salts have a positive commercial value, while a concentrate obtained by evaporation generally has a commercial negative value.

The temperature corresponding to the eutectic point is below 0°C, which concomitantly results in various advantages. At this low temperature little corrosion occurs, which may allow for cheaper materials to be used for *i.a.* the EFC crystallizer. Generally, the temperature limits the formation of gases, thereby preventing excessive foam formation. If some foam formation may occur in the process, an antifoam compound may be added to the leachate. The antifoam compound may for instance be added to the leachate before the leachate enters the EFC crystallizer and/or the antifoam compound may be added to the leachate in the EFC crystallizer. Suitable antifoam compounds may include silicon-based antifoams. Further, the low temperature may limit the formation of potentially explosive substances from nitrates and ammonium or organic compounds, which are typically present in the leachate. Moreover, even if these potentially explosive substances are formed, the low temperatures may limit the risk of explosion.

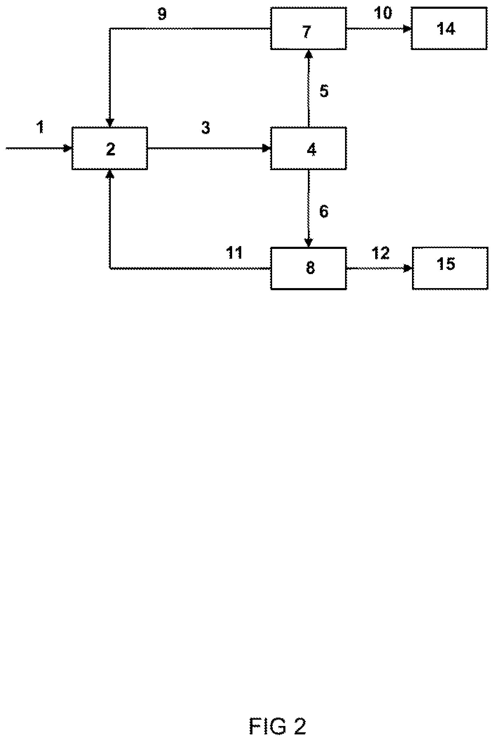

In figure 2, the leachate (1) is provided in the eutectic freeze crystallization (EFC) crystallizer (2), wherein the eutectic freeze crystallization is carried out by reducing the temperature of the leachate to a first eutectic point to obtain a first mixture (3) comprising ice and a first crystalline salt. The first mixture (3) is thereby obtained comprising ice and a first crystalline salt, which can be separated in a separator (4), typically a static separator. As the density of ice is lower than the density of the leachate the ice tends to float. On the contrary, the density of the crystalline salt is typically higher than the solution, resulting in sinking of the salt. Due to the gravitational separation, separating the ice and said first crystalline salt into an ice stream and a crystalline salt stream is facilitated.

The separation provides a first slurry stream (6) comprising the first crystalline salt and a second slurry stream (5) comprising the ice.

The first slurry stream is subjected to recovery, for example in a first recovery device (8) such as a centrifuge, wherein the first crystalline salt (12) and a first mother liquor (11) are separated and individually recovered from the first slurry stream. Additionally, or alternatively, the ice (10) and a second mother liquor (9) are separated and individually recovered from the second slurry stream in a second recovery device (7), which can also comprise a centrifuge. Preferably the recovery comprises centrifuging the first and/or second slurry stream. In the recovery device, the salt and/or ice may also be subjected to washing. For instance, the ice in the second recovery device may be washed with molten ice. Mother liquor is herein used to describe the remaining fluid after recovery and separation of the crystalline salt and/or ice from the corresponding slurry stream (*i.e.* the first mother liquor is the fluid remaining after the removal of the first crystalline salt from the first slurry stream).

The first and/or second mother liquor that are separated and individually recovered typically comprise water, dissociated ions and organic compounds. However, a substantially large quantity of the dissociated ions corresponding to the first crystalline salt have been removed. As other dissociated ions as well as organic compounds remain in the mother liquor it may be subjected to eutectic freeze crystallization for further purification. Accordingly, it is preferred that the first and/or the second mother liquor is recycled back into the EFC crystallizer. The retentate liquid after washing may also be recycled back into the EFC crystallizer.

The ice and/or the first crystalline salt are preferably individually recovered. Surprisingly, the ice and/or the crystalline salt typically have a high purity. Not wishing to be bound by theory, the inventors believe that the high purities are achieved as impurities do not fit into the crystal lattices. The purity is preferably at least 80%, preferably at least 85%, more preferably at least 90%, even more preferably at least 95%, most preferably at least 99%. The purity is typically sufficient for the salts to have commercial value. Nonetheless, it may be advantageous to perform a work-up step, for example in a first washer (15) or a first RO unit (14), of the ice and/or the first crystalline salt to allow for any contaminations that *e.g.* surround the crystal lattices to be removed. Preferably, the ice is worked-up in an RO-unit (14). The work-up step accordingly preferably comprises purification such as washing, recrystallization and/or reverse osmosis, preferably reverse osmosis and recrystallization, most preferably reverse osmosis.

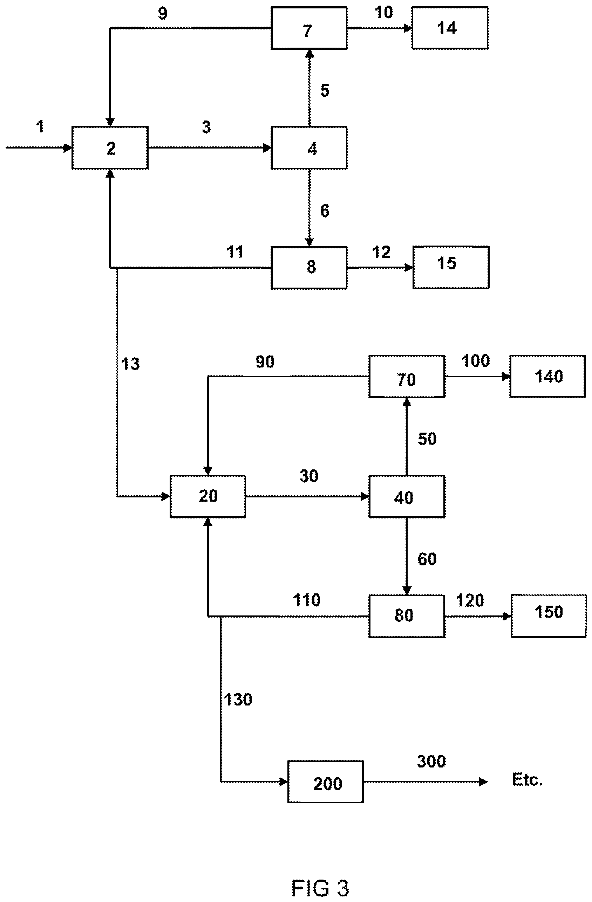

Furthermore, as indicated for a particular embodiment in Figure 3, a first bleed stream (13) is subtracted from the first mother liquor. This first bleed stream is thus at least part of the first mother liquor and therefore comprises water, dissociated ions and organic compounds. This first bleed stream is provided in a second EFC crystallizer (20) to carry out a second EFC by reducing the temperature of the first bleed stream to a second eutectic point to obtain a second mixture (30) comprising ice and a second crystalline salt. After which the ice and said second crystalline salt are separated in a second separator (40), also typically a static separator, into a second ice stream (50) and a second crystalline salt stream (60). Typically, the second eutectic point is below the first eutectic point.

Similarly, separation, optional recovery and the optional work-up step as described above is performed to obtain ice and the second crystalline salt. Figure 3 illustrates that the second ice stream (50) may be subjected to recovery in a third recovery device (70), for example a third centrifuge, to separate and individually recover a third mother liquor (90) and ice (100), which ice may be further subjected to a work-up step, for example in a second RO unit (140) or in the first RO unit (14) (not illustrated). Additionally, Figure 3 illustrates that the second crystalline salt stream (60) may be subjected to recovery in a fourth recovery device (80), for example a fourth centrifuge, to separate and individually recover a fourth mother liquor (110) and the second crystalline salt (120) that may be subjected to a work-up step, for example in a second washer (150) or in the first washer (15) (not illustrated).

The method may be continued similarly by providing a further bleed stream (130) to be provided in a further EFC crystallizer (200) to carry out a further EFC by reducing the temperature of the further bleed stream to a further eutectic point to obtain a further mixture (300) comprising ice and a further crystalline salt. This further bleed stream, further EFC crystallizer, further mixture, further crystalline salt and further eutectic point may for instance be a second bleed stream, a third EFC crystallizer, a third mixture, a third crystalline salt and a third eutectic point. The third bleed stream may comprise at least part of the fourth mother liquor. Each further eutectic point is preferably lower than the previous eutectic points, *i.e.* the third eutectic point is preferably lower than the second eutectic point and the second eutectic point is preferably lower than the first eutectic point. By the sequential EFC processes, crystalline salts form one by one simultaneously with ice. The method thus preferably provides a method to sequentially separate, optionally recover crystalline salts and optionally to work-up the crystalline salts. For instance, the first crystalline salt may comprise Na₂SO₄ (such as sodium sulfate decahydrate), the second crystalline salt may comprise KNO₃ and a third crystalline salt may comprise NaCl.

In a typical embodiment, the removal of the first three salts (*e.g.* KNO₃, NaCl, Na₂SO₄) leads to a volume reduction of more than 98%, based on the volume of the leachate. The volume reduction may be achieved by solely the removal of the salts using the EFC crystallizer or may be achieved by the removal in combination with a pre-treatment. The remaining salts and organics (approximately 0.6% based on the original amount in the leachate) are dissolved in a remaining bleed stream at an estimated concentration of over 35%. The bleed stream may accordingly be about 2% of the initial leachate volume.

In another embodiment, only KNO₃ and Na₂SO₄ may be removed from the leachate and accordingly a volume reduction of 90%, based on the volume of the leachate, may be achieved. Again, the volume reduction may be achieved by solely the removal of the salts using the EFC crystallizer or may be achieved by the removal in combination with a pre-treatment

As a last stage of the process, a final solidification may be carried out on a last bleed stream to obtain essentially zero liquid discharge by reducing the temperature below the eutectic points to obtain a final mixture comprising ice and a final solid. Liquid discharge refers to the remaining contaminated liquid. Thus, the ice that is collected and may be melted to water is not considered liquid discharge. With essentially zero liquid discharge is meant that the leachate is converted into ice, the crystalline salts, solid organics and a minimal contaminated waste stream. The method preferably removes all contaminants from the leachate in its solid form, thereby rendering zero liquid discharge. This final EFC is performed by lowering the temperature below all eutectic points (*i.e.* the eutectic points corresponding to all dissolved solids). Generally, this allows for the formation of ice and the precipitation of all dissolved solids to the final solid, after which the ice and the final solid may be separated, individually recovered and may be subjected to work-up step. It is particularly beneficial if the final solidification is carried out to remove the last contaminants (*i.a.* organic compounds) after one or more EFCs to obtain crystalline salts. The quantity of the final solid is then typically small.

Depending on the concentration of the leachate, it may be preferred to subject the leachate to a pretreating step before it is provided in the EFC crystallizer. The pretreatment step may comprise a lime softening step, a coagulation step or for instance a flocculation step which typically allows for scaling components to be removed. Scaling is mainly due to the formation of for instance CaSO₄, CaCO₃, BaSO₄, CaF₂. Due to limited scaling, the leachate may be further concentrated. Accordingly, the pretreatment step may further comprise a concentration step, preferably by RO, to increase the TDS concentration, preferably to a concentration of at least 4 wt%, more preferably up to at least 5 wt%, most preferably to a concentration of at least 6 wt%. The increased concentration is particularly preferred for economic reasons.

Furthermore, the method may be a batch or a continuous method. Preferably a continuous method to provide continuous purification of the landfill leachate.

For the purpose of clarity and a concise description, features are described herein as part of the same or separate embodiments.

The invention is further illustrated by the following example.

### Example 1

A raw landfill leachate was pretreated in a lime softening and coagulation step followed by reverse osmosis (RO) to provide a leachate. The leachate contained 0.7% sodium sulfate, 3.4% sodium chloride, 1.2% potassium nitrate, 0.5% other ions and a total organic carbon (TOC) of 0.1%. The leachate was fed into an EFC crystallizer, with a volume of 1.5m³, equipped with scraped surface heat exchangers at a flow rate of 440 kg/hour. The temperature inside the EFC crystallizer was maintained at - 14°C by cooling over the heat exchangers. At this temperature ice and sodium sulfate decahydrate crystallized from solution. The first mixture from the EFC crystallizer (*i.e.* a crystal slurry mixture) was pumped into a static separator at a flowrate of 1600 1/hour. From the bottom of the static separator the first slurry stream (a sodium sulfate decahydrate slurry) was fed into a centrifuge at a flowrate of 200 1/h. The first mother liquor from the centrifuge was fed back into the EFC crystallizer. The sodium sulfate decahydrate crystals from the centrifuge were produced at a production rate of 6 kg/h and were substantially pure. From the top of the static separator the second slurry stream (ice slurry) was fed into a centrifuge at a flow rate of 1400 1/h. The ice crystals were washed in the centrifuge with molten ice. After discharge from the centrifuge the ice crystals were molten by heating. The TDS of the molten ice was 0.5% and the molten ice was further subjected to a work-up step by purification in a RO polishing step. The retentate of the RO was fed back into the EFC crystallizer. From the first mother liquor recycle a continuous first bleed stream was collected at 90 kg/hour. The first bleed stream contained 0.6% sodium sulfate, 14% sodium chloride, 5% potassium nitrate, 2% other ions and a TOC of 0.3%. 16m³ of the first bleed stream was collected and used for the next EFC step.
The first bleed stream was fed into a second EFC crystallizer equipped with scraped surface heat exchangers at a flow rate of 440 kg/hour. The temperature inside the EFC crystallizer was maintained at -25°C by cooling over the heat exchangers. At this temperature ice, potassium nitrate and a small amount of sodium sulfate decahydrate crystallized from solution. The second mixture from the second EFC crystallizer was pumped into a second static separator at a flowrate of 1600 l/hour. From the bottom of the second static separator the fourth slurry stream (potassium nitrate slurry) was fed into a centrifuge at a flowrate of 200 l/h. The fourth mother liquor from the centrifuge was fed back into the EFC crystallizer. The potassium nitrate crystals from the centrifuge were produced at a production rate of 17 kg/h. From the top of the static separator the third slurry stream (ice slurry) was fed into a centrifuge at a flow rate of 1400 l/h. The ice crystals were washed in the centrifuge with molten ice. After discharge from the centrifuge the ice crystals were molten by heating. The TDS of the molten ice was 1% and the molten ice was further subjected to a work-up step by purification in a RO polishing step. The retentate of the RO was fed back into the EFC crystallizer. From the fourth mother liquor recycle a continuous further bleed stream was collected at 235 kg/hour. This further bleed stream contained 0.6% sodium sulfate, 24% sodium chloride, 3% potassium nitrate, 4% other ions and a TOC of 0.5%.

## Claims

1. A method for purifying landfill leachate (1) comprising water, dissociated ions and organic compounds, wherein the method comprises:
- providing the leachate in a eutectic freeze crystallization (EFC) crystallizer (2);
- carrying out eutectic freeze crystallization by reducing the temperature of the leachate to a first eutectic point to obtain a first mixture (3) comprising ice and a first crystalline salt;
- separating the ice and said first crystalline salt into an ice stream and a crystalline salt stream to provide a first slurry stream (6) comprising the first crystalline salt and a second slurry stream (5) comprising the ice;
- recovery by separating and individually recovering the first crystalline salt (12) and a first mother liquor (11) from the first slurry stream;
- providing a first bleed stream (13) which is at least part of the first mother liquor in a second eutectic freeze crystallization (EFC) crystallizer (20);
- carrying out eutectic freeze crystallization by reducing the temperature of the first bleed stream to a second eutectic point to obtain a second mixture (30) comprising ice and a second crystalline salt;
- separating the ice and said second crystalline salt into a second ice stream (50) and a second crystalline salt stream (60).

2. Method according to the previous claim wherein the ice forms simultaneously and optionally also before formation of the first crystalline salt in the eutectic freeze crystallization step.

3. Method according to any of the previous claims, wherein the method further comprises a recovery wherein the ice (10) and a second mother liquor (9) are separated and individually recovered from the second slurry stream (5), preferably wherein the recovery comprises centrifuging the first (6) and/or second slurry stream (5).

4. Method according to the previous claim wherein a part of the first mother liquor (11) and/or the second mother liquor (9) is recycled back into the EFC crystallizer (2).

5. Method according to any of the previous claims further comprising a work-up step to purify the ice and/or the first crystalline salt, preferably wherein the work-up step comprises purification such as washing, recrystallization and/or reverse osmosis.

6. Method according to any of the previous claims wherein the temperature of the second eutectic point is below that of the first eutectic point.

7. Method according to any of the previous claims, wherein the method further comprises a recovery in a fourth recovery device (80), wherein a fourth mother liquor (110) and the second crystalline salt (120) are separate and individually recovered from the second crystalline salt stream (60).

8. Method according to the previous claims further comprising:
- providing a second bleed stream (130) which is at least part of the fourth mother liquor (110) in a third eutectic freeze crystallization (EFC) crystallizer (200);
- carrying out eutectic freeze crystallization by reducing the temperature of the second bleed stream to a third eutectic point to obtain a third mixture (300) comprising ice and a third crystalline salt;
- separating the ice and said third crystalline salt into an ice stream and a third crystalline salt stream,
preferably wherein the temperature of the third eutectic point is below that of the second eutectic point.

9. Method according to the previous claim wherein the first crystalline salt comprises Na₂SO₄, the second crystalline salt comprises KNO₃ and the third crystalline salt comprises NaCl.

10. Method according to any of the previous claims to obtain essentially zero liquid discharge wherein the method further comprises
- carrying out a final solidification by reducing the temperature below the eutectic points corresponding to the dissociated ions and organic compounds to obtain a final mixture comprising ice and a final solid;
- separating the ice and said final solid into an ice stream and a final solid stream.

11. Method according to any of the previous claims wherein the leachate (1) is subjected to a pretreating before it is provided in the EFC crystallizer (2), said pretreatment comprising:
- a flocculation step, coagulation step, lime softening step and/or
- a concentrating step, preferably by reverse osmosis, to increase the concentration of total dissolved solids (TDS), preferably to a concentration of at least 4 wt%, more preferably up to at least 5 wt%, most preferably to a concentration of at least 6 wt%.

12. Method according to any of the previous claims wherein the dissociated ions are selected from the group of: magnesium (Mg²⁺), calcium (Ca²⁺), sodium (Na⁺), potassium (K⁺), sulfate (SO₄²⁻), nitrate (NO₃⁻), chloride (Cl⁻) and ammonium (NH₄⁺).

13. Method according to any of the previous claims wherein an antifoam compound is added to the leachate (1) in the EFC crystallizer (2) and/or to the leachate before providing the leachate in the EFC crystallizer.

14. Method according to any of the previous claims wherein the method is a continuous method.

## Patentansprüche

1. Verfahren zum Aufreinigen von Deponiesickerwasser (1), umfassend Wasser, dissoziierte Ionen und organische Verbindungen, wobei das Verfahren umfasst:
- Bereitstellen des Sickerwassers in einem Kristallisator (2) für eutektische Gefrierkristallisation (EFC);
- Durchführen von eutektischer Gefrierkristallisation durch Reduzieren der Temperatur des Sickerwassers auf einen ersten eutektischen Punkt, um eine erste Mischung (3), umfassend Eis und ein erstes kristallines Salz, zu erhalten;
- Trennen des Eises und des ersten kristallinen Salzes in einen Eisstrom und einen kristallinen Salzstrom, um einen ersten Aufschlämmungsstrom (6), umfassend das erste kristalline Salz, und einen zweiten Aufschlämmungsstrom (5), umfassend das Eis, bereitzustellen;
- Rückgewinnung durch Trennen und individuelles Rückgewinnen des ersten kristallinen Salzes (12) und einer ersten Mutterlauge (11) aus dem ersten Aufschlämmungsstrom;
- Bereitstellen eines ersten Ablassstroms (13), der mindestens ein Teil der ersten Mutterlauge ist, in einem zweiten Kristallisator (20) für eutektische Gefrierkristallisation (EFC);
- Durchführen von eutektischer Gefrierkristallisation durch Reduzieren der Temperatur des ersten Ablassstroms auf einen zweiten eutektischen Punkt, um eine zweite Mischung (30), umfassend Eis und ein zweites kristallines Salz, zu erhalten;
- Trennen des Eises und des zweiten kristallinen Salzes in einen zweiten Eisstrom (50) und einen zweiten kristallinen Salzstrom (60).

2. Verfahren nach dem vorstehenden Anspruch, wobei sich das Eis gleichzeitig und optional auch vor der Bildung des ersten kristallinen Salzes in dem Schritt der eutektischen Gefrierkristallisation bildet.

3. Verfahren nach einem der vorstehenden Ansprüche, wobei das Verfahren ferner eine Rückgewinnung umfasst, wobei das Eis (10) und eine zweite Mutterlauge (9) getrennt und einzeln aus dem zweiten Aufschlämmungsstrom (5) rückgewonnen werden, vorzugsweise wobei die Rückgewinnung Zentrifugieren des ersten (6) und/oder zweiten Aufschlämmungsstroms (5) umfasst.

4. Verfahren nach dem vorstehenden Anspruch, wobei ein Teil der ersten Mutterlauge (11) und/oder der zweiten Mutterlauge (9) in den EFC-Kristallisator (2) zurückgeführt wird.

5. Verfahren nach einem der vorstehenden Ansprüche, ferner umfassend einen Aufarbeitungsschritt zum Aufreinigen des Eises und/oder des ersten kristallinen Salzes, vorzugsweise wobei der Aufarbeitungsschritt eine Aufreinigung wie Waschen, Umkristallisation und/oder Umkehrosmose umfasst.

6. Verfahren nach einem der vorstehenden Ansprüche, wobei die Temperatur des zweiten eutektischen Punktes unter der des ersten eutektischen Punktes liegt.

7. Verfahren nach einem der vorstehenden Ansprüche, wobei das Verfahren ferner eine Rückgewinnung in einer vierten Rückgewinnungsvorrichtung (80) umfasst, wobei eine vierte Mutterlauge (110) und das zweite kristalline Salz (120) getrennt sind und einzeln aus dem zweiten kristallinen Salzstrom (60) rückgewonnen werden.

8. Verfahren nach den vorstehenden Ansprüchen, ferner umfassend:
- Bereitstellen eines zweiten Ablassstroms (130), der mindestens ein Teil der vierten Mutterlauge (110) ist, in einem dritten Kristallisator (200) für eutektische Gefrierkristallisation (EFC);
- Durchführen von eutektischer Gefrierkristallisation durch Reduzieren der Temperatur des zweiten Ablassstroms auf einen dritten eutektischen Punkt, um eine dritte Mischung (300), umfassend Eis und ein drittes kristallines Salz, zu erhalten;
- Trennen des Eises und des dritten kristallinen Salzes in einen Eisstrom und einen dritten kristallinen Salzstrom,
vorzugsweise wobei die Temperatur des dritten eutektischen Punktes unter der des zweiten eutektischen Punktes ist.

9. Verfahren nach dem vorstehenden Anspruch, wobei das erste kristalline Salz Na₂SO₄ umfasst, das zweite kristalline Salz KNO₃ umfasst und das dritte kristalline Salz NaCl umfasst.

10. Verfahren nach einem der vorstehenden Ansprüche zum Erhalten eines Flüssigkeitsausstoßes von im Wesentlichen Null, wobei das Verfahren ferner umfasst
- Durchführen einer finalen Verfestigung durch Reduzieren der Temperatur unter die eutektischen Punkte, die den dissoziierten Ionen und organischen Verbindungen entsprechen, um eine finale Mischung umfassend Eis und einen finalen Feststoff zu erhalten;
- Trennen des Eises und des finalen Feststoffs in einen Eisstrom und einen finalen Feststoffstrom.

11. Verfahren nach einem der vorstehenden Ansprüche, wobei das Sickerwasser (1) einer Vorbehandlung unterzogen wird, bevor es in dem EFC-Kristallisator (2) bereitgestellt wird, wobei die Vorbehandlung umfasst:
- einen Flockungsschritt, Koagulationsschritt, Kalkenthärtungsschritt und/oder
- einen Konzentrationsschritt, vorzugsweise durch Umkehrosmose, um die Konzentration der gesamten gelösten Feststoffe (TDS) zu erhöhen, vorzugsweise auf eine Konzentration von mindestens 4 Gew.-%, bevorzugter auf bis zu mindestens 5 Gew.-% und am bevorzugtesten auf eine Konzentration von mindestens 6 Gew.-%.

12. Verfahren nach einem der vorstehenden Ansprüche, wobei die dissoziierten Ionen ausgewählt sind aus der Gruppe: Magnesium (Mg²⁺), Calcium (Ca²⁺), Natrium (Na⁺), Kalium (K⁺), Sulfat (SO₄²⁻), Nitrat (NO₃₋), Chlorid (CI-) und Ammonium (NH₄₊).

13. Verfahren nach einem der vorstehenden Ansprüche, wobei eine Antischaumverbindung zu dem Sickerwasser (1) in dem EFC-Kristallisator (2) und/oder zu dem Sickerwasser vor dem Bereitstellen des Sickerwassers in dem EFC-Kristallisator, hinzugefügt wird.

14. Verfahren nach einem der vorstehenden Ansprüche, wobei das Verfahren ein kontinuierliches Verfahren ist.

## Revendications

1. Procédé pour purifier un lixiviat de décharge (1) comprenant de l'eau, des ions dissociés et des composés organiques, lequel procédé comprend :
- l'introduction du lixiviat dans un cristallisoir de cristallisation par congélation eutectique (EFC) (2) ;
- la mise en oeuvre d'une cristallisation par congélation eutectique au moyen d'une réduction de la température du lixiviat jusqu'à un premier point eutectique pour que soit obtenu un premier mélange (3) comprenant de la glace et un premier sel cristallin ;
- la séparation de la glace et dudit premier sel cristallin en un courant de glace et un courant de sel cristallin pour former un premier courant de bouillie (6) comprenant le premier sel cristallin et un deuxième courant de bouillie (5) comprenant la glace ;
- la récupération par séparation et récupération individuelle du premier sel cristallin (12) et d'une première liqueur mère (11) à partir du premier courant de bouillie ;
- l'introduction d'un premier courant de purge (13) qui est au moins une partie de la première liqueur mère dans un deuxième cristallisoir de cristallisation par congélation eutectique (EFC) (20) ;
- la mise en oeuvre d'une cristallisation par congélation eutectique au moyen d'une réduction de la température du premier courant de purge jusqu'à un deuxième point eutectique pour que soit obtenu un deuxième mélange (30) comprenant de la glace et un deuxième sel cristallin ;
- la séparation de la glace et dudit deuxième sel cristallin en un deuxième courant de glace (50) et un deuxième courant de sel cristallin (60).

2. Procédé selon la revendication précédente, dans lequel la glace se forme en même temps que et éventuellement aussi avant la formation du premier sel cristallin dans l'étape de cristallisation par congélation eutectique.

3. Procédé selon l'une quelconque des revendications précédentes, lequel procédé comprend en outre une récupération dans laquelle la glace (10) et une deuxième liqueur mère (9) sont séparées et individuellement récupérées à partir du deuxième courant de bouillie (5), de préférence dans lequel la récupération comprend la centrifugation des premier (6) et/ou deuxième courants de bouillie (5).

4. Procédé selon la revendication précédente, dans lequel une partie de la première liqueur mère (11) et/ou de la deuxième liqueur mère (9) est renvoyée pour être recyclée dans le cristallisoir EFC (2).

5. Procédé selon l'une quelconque des revendications précédentes, comprenant en outre une étape de traitement conclusif pour purifier la glace et/ou le premier sel cristallin, de préférence dans lequel l'étape de traitement conclusif comprend une purification telle qu'un lavage, une recristallisation et/ou une osmose inverse.

6. Procédé selon l'une quelconque des revendications précédentes, dans lequel la température du deuxième point eutectique est inférieure à celle du premier point eutectique.

7. Procédé selon l'une quelconque des revendications précédentes, lequel procédé comprend en outre une récupération dans un quatrième dispositif de récupération (80), dans lequel une quatrième liqueur mère (110) et le deuxième sel cristallin (120) sont séparés et individuellement récupérés à partir du deuxième courant de sel cristallin (60).

8. Procédé selon les revendications précédentes, comprenant en outre :
- l'introduction d'un deuxième courant de purge (130) qui est au moins une partie de la quatrième liqueur mère (110) dans un troisième cristallisoir de recristallisation par congélation eutectique (EFC) (200) ;
- la mise en oeuvre d'une cristallisation par congélation eutectique au moyen d'une réduction de la température du deuxième courant de purge jusqu'à un troisième point eutectique pour que soit obtenu un troisième mélange (300) comprenant de la glace et un troisième sel cristallin ;
- la séparation de la glace et dudit troisième sel cristallin en un courant de glace et un troisième courant de sel cristallin,
de préférence dans lequel la température du troisième point eutectique est inférieure à celle du deuxième point eutectique.

9. Procédé selon la revendication précédente, dans lequel le premier sel cristallin comprend Na₂SO₄, le deuxième sel cristallin comprend KNO₃, et le troisième sel cristallin comprend NaCl.

10. Procédé selon l'une quelconque des revendications précédentes pour l'obtention d'un déversement pratiquement sans liquide, lequel procédé comprend en outre
- la mise en oeuvre d'une solidification finale par réduction de la température au dessous des points eutectiques correspondant aux ions dissociés et aux composés organiques pour que soit obtenu un mélange final comprenant de la glace et un solide final ;
- la séparation de la glace et dudit solide final en un courant de glace et un courant de solide final.

11. Procédé selon l'une quelconque des revendications précédentes, dans lequel le lixiviat (1) est soumis à un prétraitement avant d'être introduit dans le cristallisoir EFC (2), ledit prétraitement comprenant :
- une étape de floculation, une étape de coagulation, une étape d'adoucissement à la chaux et/ou
- une étape de concentration, de préférence par osmose inverse, pour augmenter la concentration des solides dissous totaux (TDS), de préférence jusqu'à une concentration d'au moins 4 % en poids, mieux encore jusqu'à au moins 5 % en poids, tout spécialement jusqu'à une concentration d'au moins 6 % en poids.

12. Procédé selon l'une quelconque des revendications précédentes, dans lequel les ions dissociés sont choisis dans le groupe suivant : magnésium (Mg²⁺), calcium (Ca²⁺), sodium (Na⁺), potassium (K⁺), sulfate (SO₄²⁻), nitrate (NO₃⁻), chlorure (Cl⁻) et ammonium (NH₄⁺).

13. Procédé selon l'une quelconque des revendications précédentes, dans lequel un composé antimousse est ajouté au lixiviat (1) dans le cristallisoir EFC (2) et/ou au lixiviat avant introduction du lixiviat dans le cristallisoir EFC.

14. Procédé selon l'une quelconque des revendications précédentes, lequel procédé est un procédé en continu.
